# EUROPEAN PATENT APPLICATION

(11) **EP 1 291 993 A1**
(43) Date of publication of application: **12.03.2003**
(21) Application number: 02380169.9
(22) Date of filing: 30.07.2002
(51) Int. Cl.: H02G 3/04

(54) **Metal raceway for electrical wiring**

(30) Priority: 06.09.2001 ES 200102230 U
(71) Applicant: Aparellaje Electrico S.L., 08903-L'Hospitalet De Llobregat (Barcelona) (ES)
(72) Inventor: Benito Navazo, Juan Manuel, 08290 Sant Cugat del Valles (Barcelona) (ES)
(74) Representative: Curell Aguilà, Marcelino

(57) **Abstract**

A metal raceway for electrical wiring, with at least two lengths of a base section (1), provided with a bottom wall (3) and external walls (4), and at least two lengths of a cover section (2); it is provided with at least one pair short connection strips (10) such that in each pair, the strips are parallel and close together; are orientated longitudinally relative to the raceway; are capable of containing connection cables (13); and of receiving the insertion of self-tapping screws (12).

## Description

This invention relates to a metal raceway for electrical wiring, particularly a metal raceway having means for the electrical connection thereof to a conventional ground.

These metal raceways for housing electrical cables are of the type formed by extrusions or sections of aluminium, steel or other metal and which are formed by the association of two or more lengths of base sections with a like number of cover sections, where the various lengths of base or cover section and, in certain cases, the assembly and connection fittings therefore, such as bends, taps, forks, etc. are electrically connected together and the ensemble to a conventional ground.

Normally, two successive lengths of base or cover section are electrically connected together by screws threaded into a hole in the section, which has to be made in each case in the two sections to be connected, and which are electrically joined by an electrically conducting cable.

Such is the case of the raceway for electrical wiring disclosed in Spanish Industrial Model 142,632 of the present applicant, in which the cover section is provided with a longitudinal strip to which, after the pertinent holes have been made, the screws to which the ends of the cables for the electrical grounding of the sections are fixed, thereby allowing the ensemble to be connected to the conventional ground.

This line of action suffers from the drawback that the base or cover section has to be handled for forming, at certain points thereof, the holes for threaded attachment of the screws for holding the ends of the cables for the electrical grounding connection of said cables together and to the ground.

It is an object of the invention to overcome the above-mentioned drawback and to this end the solution has been adopted of organizing the base or cover sections in such a way the cable electrically connecting the mass of two consecutive lengths is attached to the sections by screws that are installed directly, without previously having to form holes.

In accordance with the foregoing ideas, the present invention is characterized in that the raceway is provided with at least two short connection strips such that in each pair, said strips: [i] are parallel and close together; [ii] are orientated longitudinally relative to said raceway; [iii] are capable of containing connection cables; and [iv] are capable of receiving the insertion of self-tapping screws.

According to the invention, preferably at least one of said pairs of said short connection strips extends from the bottom wall of said base section lengths.

Also according to the invention, in at least one of said pairs said short connection strips are located close to one of the outer walls, with there preferably being two of said pairs of said short connection strips, respectively located close to opposite side walls.

According to a further preferred feature of the invention, in each of said pairs, said connection strips are inclined relative to said bottom wall of said base section, said inclination allowing the access of a screwdriver to said self-tapping screws.

It is contemplated that said bottom wall of said base section be provided with at least one inclined region, close to one of said side walls, in such a way that said pair of said short lateral connection strips extend from said inclined region.

Alternatively, according to the invention, at least one of said pairs of said connection strips extends from said cover sections of said raceway.

To facilitate the understanding of the foregoing ideas, there is described hereinafter a preferred embodiment of the object of the invention, with reference to the accompanying drawings, in which:
Figure 1 is a cross section view of a straight section of an extruded type metal raceway, provided with two longitudinal compartments with their respective cover sections, in which two pairs of connection strips of the invention have been incorporated.
Figure 2 is an exploded perspective view of a detail of the base section of the raceway of Figure 1, showing a pair of connection strips and a self-tapping screw with the corresponding terminal washers of respective connection cables, prior to installation thereof.
Figure 3 is a fragmentary elevation view of the base section and the members of the previous Figure, after assembly to the pair of connection strips.
Figure 4 is a view of the bottom wall of the channel formed between the pair of connection strips of the previous Figures, after insertion of the self-tapping screw and laying of the connection cables between the pair of connection strips.

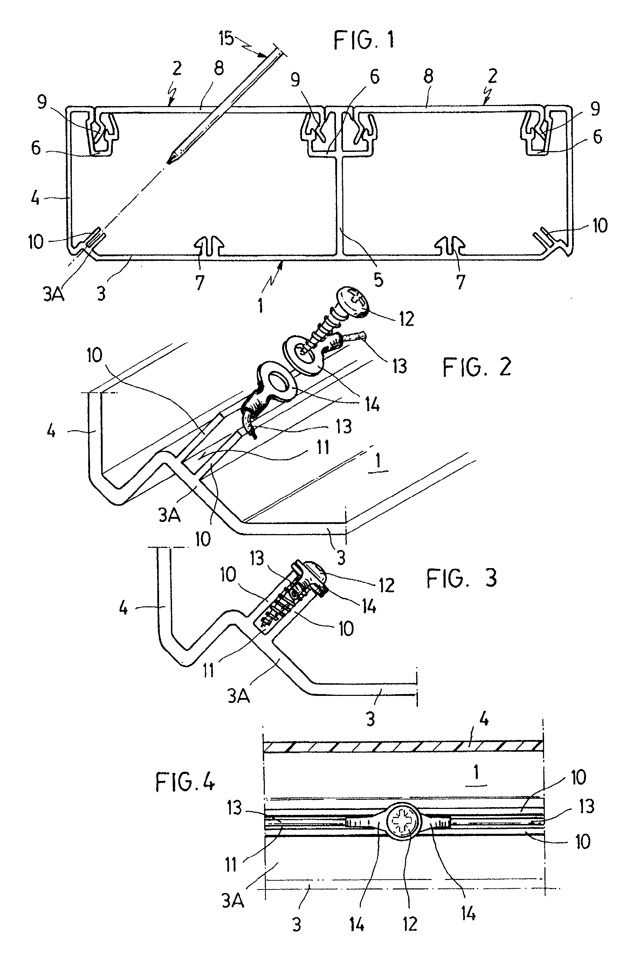

As shown in Figure 1, a metal raceway of the type described is formed by a base section 1 and two cover sections 2, in this case all being of extruded aluminium, without this excluding that, with the appropriate configuration, they could be of shaped steel sheet or other.

The base section 1 is conventionally provided with a bottom wall 3, two external side walls 4, an internal partition 5, respective pairs of receptacles 6 for fitting the cover sections 2 and seats 7 for the possible installation of not shown sub-compartmenting removable partitions.

With regard to the cover section 2, it is likewise provided with a flat back portion 8 and longitudinal flanges 9 mating with the receptacles 6 of the base section 1.

As shown in Figure 1 and detailed in Figures 2 through 4, the base section 1 is provided at the base wall 3 thereof with connection strips 10 that are parallel and closely spaced apart and which in the case shown extend from a sloping region 3A of the bottom wall 3 close to the dihedron formed between the bottom wall 3 itself and the corresponding external wall 4. In the absence of such sloping region 3A on the bottom wall 3 of the base section 1, the said pair of connection strips 10 extends from the bottom wall 3, with the same slope and in the same position. In all cases, the strips 10 are longitudinally orientated relative to the raceway.

The pair of connection strips 10 forms a channel dimensioned in such a way that between the walls thereof a self-tapping screw 12 may be housed and attached to the inner surfaces thereof by self-threading, as may be seen in Figure 3.

he self-tapping screw 12 is connected to grounding cables 13 by electrical terminal washers 14, as may be seen in Figures 2 and 3, said grounding cables 13 being housed laid inside the channel 11 of the pair of connection strips 10, as shown in Figure 4.

In each metal raceway of the case, there are two pairs of connection strips 10, independently of the number of compartments provided in the raceway, situated at the angles formed by the bottom wall 3 and the outer walls 4, so that the base section 1 does not have only one assembly position.

The slope of the connection strips 10, as shown by the dash-dot line of Figure 1, is appropriate to allow, after removal of the cover section 2 from the base section 1, access to the connection strips 10 for the placement, or removal, of the self-tapping screws 12 with a screwdriver 15 or other appropriate tool.

Obviously, said pairs of connection strips 10 provided in the base section 1 could be provided in the cover section 2, suitably adapted.
With the present metal raceway provided with the pairs of connection strips 10, it is unnecessary to bore holes for the attachment of the self-tapping screws 12, whereby the conditions of installation of such raceways are improved.

## Claims

1. A metal raceway for electrical wiring, comprising the association of at least two lengths of a base section (1), provided with a bottom wall (3) and external walls (4), and at least two lengths of a cover section (2), **characterized in that** it is provided with at least one pair of short connection strips (10) such that in each pair, said strips: [i] are parallel and close together; [ii] are orientated longitudinally relative to said raceway; [iii] are capable of containing connection cables; and [iv] are capable of receiving the insertion of self-tapping screws.

2. The metal raceway of claim 1, **characterized in that** in at least one of said pairs, said short connection strips (10) extend from said bottom wall (3) of said base section (1) lengths.

3. The metal raceway of claim 2, **characterized in that**, in at least one of said pairs, said short connection strips (10) are located close to one of said outer walls (4).

4. The metal raceway of at least one of claims 2 or 3, **characterized in that** there are two of said pairs of said short connection strips (10), respectively located close to opposite side walls (4).

5. The metal raceway of at least one of claims 1 to 4, **characterized in that**, in each of said pairs, said connection strips (10) are inclined relative to said bottom wall (3) of said base section (1), said inclination allowing the access of a screwdriver (15) to said self-tapping screws (12).

6. The metal raceway of at least one of claims 1 to 5, **characterized in that** in said bottom wall (3) of said base section (1) there is to be found at least one inclined region (3A), close to one of said side walls (4), in such a way that said pair of said short connection strips (10) extends from said inclined region (3A).

7. The metal raceway of claim 1, **characterized in that** at least one of said pairs of said connection strips (10) extends from said cover sections (2) of said raceway.
